# EUROPEAN PATENT APPLICATION

(11) **EP 4 811 468 A1**
(43) Date of publication of application: **23.09.2026**
(21) Application number: 24891263.6
(22) Date of filing: 01.11.2024
(51) Int. Cl.: H01M 4/96, B01J 27/24, B01J 35/60, C25B 11/052, C25B 11/075, C25B 11/091, H01M 8/10, H01M 12/06, H01M 12/08

(54) **CARBON CATALYST, ELECTRODE, AND BATTERY**

(30) Priority: 17.11.2023 JP 2023195715
(71) Applicant: National University Corporation Gunma University, Maebashi-shi, Gunma 371-8510 (JP); Nisshinbo Holdings Inc., Tokyo 103-8650 (JP)
(72) Inventor: OZAKI, Jun-ichi, Maebashi-shi, Gunma 371-8510 (JP); KAMEYAMA, Rieko, Maebashi-shi, Gunma 371-8510 (JP); ISHII, Takafumi, Maebashi-shi, Gunma 371-8510 (JP); KUBOTA, Yuji, Chiba-shi, Chiba 267-0056 (JP)
(74) Representative: Vossius & Partner Patentanwälte Rechtsanwälte mbB
(86) International application number: PCT/JP2024/039105
(87) International publication number: WO 2025/105224

(57) **Abstract**

Provided are a carbon catalyst, an electrode, and a battery, each having both high catalytic activity and high durability. The carbon catalyst has an L/La ratio of 18 or more, the L/La ratio being the ratio of an average carbon network plane size L, obtained by temperature programmed desorption analysis capable of increasing a temperature up to 1,600°C, to a crystallite size La, obtained from a diffraction peak in the vicinity of a diffraction angle (2θ) of 43° in an X-ray diffraction pattern obtained by powder X-ray diffraction using a CuKα ray, and has a ratio of a halogen atom concentration (at%) to a carbon atom concentration (at%), which is obtained by X-ray photoelectron spectroscopy, of 0.0005 or more.

## Description

### Technical Field

The present invention relates to a carbon catalyst, an electrode, and a battery.

### Background Art

In Patent Literature 1, there is a description of a carbonaceous material having a crystal structure in which: a <002> spacing determined by wide-angle X-ray analysis is from 3.40 Å to 3.60 Å; a crystallite size in its c-axis direction is from 15 Å to 150 Å; and a crystallite size in its a-axis direction is from 25 Å to 75 Å, the carbonaceous material being characterized in that: the intensity ratio (ID/IG) of a peak intensity (ID) near 1,360 cm⁻¹ to a peak intensity (IG) near 1,580 cm⁻¹ in its spectrum determined by laser Raman spectroscopy at an excitation wavelength of 532 nm is from 0.2 to 2.0; and its Ti content obtained by ICP atomic emission spectroscopy is from 0.1 wt% to 30 wt%.

### Citation List

### Patent Literature

[PTL 1] JP 2018-123447 A

### Summary of Invention

### Technical Problem

It has heretofore been difficult to obtain a carbon catalyst having both high catalytic activity and high durability.

The present invention has been made in view of the above-mentioned problem, and one of the objects of the present invention is to provide a carbon catalyst, an electrode, and a battery each having both high catalytic activity and high durability.

### Solution to Problem

[1] A carbon catalyst according to one embodiment of the present invention for solving the above-mentioned problem has an L/La ratio of 18 or more, the L/La ratio being a ratio of an average carbon network plane size L obtained by temperature programmed desorption analysis capable of increasing a temperature up to 1,600°C to a crystallite size La obtained from a diffraction peak in the vicinity of a diffraction angle (2θ) of 43° in an X-ray diffraction pattern obtained by powder X-ray diffraction using a CuKα ray, and has a ratio of a halogen atom concentration (at%) to a carbon atom concentration (at%), which is obtained by X-ray photoelectron spectroscopy, of 0.0005 or more. According to the present invention, a carbon catalyst having both high catalytic activity and high durability is provided.
[2] In the carbon catalyst according to the above-mentioned item [1], the average carbon network plane size L may be 5 nm or more.
[3] In the carbon catalyst according to the above-mentioned item [1] or [2], the crystallite size La may be 10.00 nm or less.
[4] The carbon catalyst according to any one of the above-mentioned items [1] to [3] may include a nitrogen atom.
[5] The carbon catalyst according to any one of the above-mentioned items [1] to [4] may have a ratio of a nitrogen atom concentration (at%) to a carbon atom concentration (at%), which is obtained by the X-ray photoelectron spectroscopy, of 0.0005 or more.
[6] The carbon catalyst according to any one of the above-mentioned items [1] to [5] may have a percentage of an area of a quaternary nitrogen atom peak to a total area of the following four nitrogen atom peaks of 0.1% or more, the percentage being obtained by subjecting an N1s spectrum in a spectrum obtained by the X-ray photoelectron spectroscopy to peak separation into the four nitrogen atom peaks: (1) a pyridinic nitrogen atom peak having a peak top in a range of 398.5±0.3 eV and having a full width at half maximum of 1.4 eV; (2) a pyrrolic/pyridonic nitrogen atom peak having a peak top in a range of 400.5±0.3 eV and having a full width at half maximum of 1.4 eV; (3) the quaternary nitrogen atom peak having a peak top in a range of 401.5±0.3 eV and having a full width at half maximum of 1.4 eV; and (4) an oxidized nitrogen atom peak having a peak top in a range of 402.5±0.3 eV and having a full width at half maximum of 2.0 eV.
[7] The carbon catalyst according to any one of the above-mentioned items [1] to [6] may have a BET specific surface area obtained by a nitrogen adsorption method of 50 m²/g or more.
[8] An electrode according to one embodiment of the present invention for solving the above-mentioned problem includes the carbon catalyst of any one of the above-mentioned items [1] to [7]. According to the present invention, an electrode having both high catalytic activity and high durability is provided.
[9] A battery according to one embodiment of the present invention for solving the above-mentioned problem includes the electrode of the above-mentioned item [8]. According to the present invention, a battery having both high catalytic activity and high durability is provided.

### Advantageous Effects of Invention

According to the present invention, a carbon catalyst, an electrode, and a battery, each having both high catalytic activity and high durability, are provided.

### Brief Description of Drawings

FIG. 1 is an explanatory view of a coronene model regarding an average carbon network plane size L.
FIG. 2 is an explanatory diagram showing an example of the evaluation results of the characteristics of carbon catalysts in Examples according to an embodiment of the present invention.

### Description of Embodiments

One of the embodiments of the present invention will be described below. The present invention is not limited to examples described in the embodiment.

A carbon catalyst according to an embodiment of the present invention (hereinafter referred to as "catalyst of the present invention") is a carbon material that exhibits catalytic activity. The catalyst of the present invention mainly includes carbon. Specifically, the carbon content of the catalyst of the present invention may be, for example, 70 wt% or more, and is preferably 75 wt% or more, more preferably 80 wt% or more, still more preferably 83 wt% or more, particularly preferably 85 wt% or more. The carbon content of the catalyst of the present invention may be, for example, 99 wt% or less, 95 wt% or less, or 93 wt% or less. The carbon content of the catalyst of the present invention may be specified by freely combining any one of the above-mentioned lower limit values and any one of the above-mentioned upper limit values. The carbon content of the carbon catalyst is obtained by elemental analysis (combustion method) .

The catalyst of the present invention itself alone exhibits catalytic activity. That is, the catalyst of the present invention exhibits catalytic activity without including a noble metal supported thereon. The catalytic activity to be exhibited by the catalyst of the present invention is, for example, reduction reaction catalytic activity and/or oxidation reaction catalytic activity, more specifically oxygen reduction reaction catalytic activity and/or hydrogen oxidation reaction catalytic activity, and the catalyst of the present invention may exhibit at least oxygen reduction reaction catalytic activity.

The inventors of the present invention have undertaken intensive investigations into technical means for obtaining a carbon catalyst having both high catalytic activity and high durability, and as a result, have uniquely found that a carbon catalyst having a relatively large L/La ratio, which is the ratio of an average carbon network plane size L to the crystallite size La of the carbon structure of the carbon catalyst, and including a halogen atom introduced thereinto, has high durability in addition to high catalytic activity. Thus, the inventors have completed the present invention.

That is, the catalyst of the present invention has an L/La ratio, which is the ratio of an average carbon network plane size L, obtained by temperature programmed desorption analysis capable of increasing a temperature up to 1,600°C, to a crystallite size La obtained from a diffraction peak in the vicinity of a diffraction angle (2θ) of 43° in an X-ray diffraction pattern obtained by powder X-ray diffraction using a CuKα ray, of 18 or more.

The L/La ratio of the catalyst of the present invention is, for example, preferably 19 or more, more preferably 20 or more, still more preferably 21 or more, still more preferably 22 or more, still more preferably 23 or more, still more preferably 24 or more, still more preferably 25 or more, still more preferably 26 or more, still more preferably 27 or more, still more preferably 28 or more, and particularly preferably 29 or more.

The upper limit value of the L/La ratio of the catalyst of the present invention is not particularly limited as long as the effect of the present invention is obtained. However, the upper limit value may be, for example, 12,500 or less, 10,000 or less, 5,000 or less, 1,000 or less, 700 or less, 500 or less, 300 or less, 200 or less, 100 or less, 50 or less, or 40 or less. The L/La ratio of the catalyst of the present invention may be specified by freely combining any one of the above-mentioned lower limit values and any one of the above-mentioned upper limit values.

The L/La ratio contributes to improvements in catalytic activity and durability of the catalyst of the present invention. That is, for example, a carbon structure having a relatively large L/La ratio contributes to effective improvements in catalytic activity and durability of the catalyst of the present invention due to an increase in curved portion of its carbon network plane serving as a catalytic active site, and/or, a decrease in edge site of the carbon network plane serving as a catalytic active site, while the edge site of the carbon network plane may also serve as a starting point of deterioration.

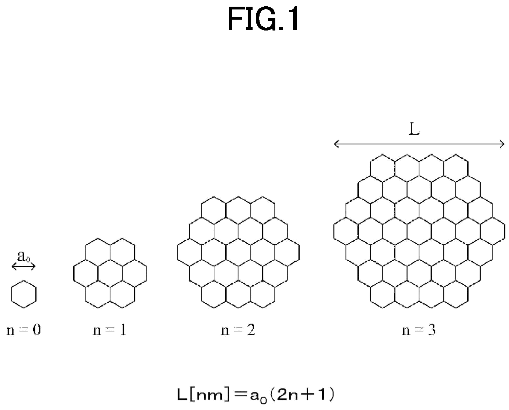

The average carbon network plane size L is obtained by temperature programmed desorption analysis (hereinafter referred to as "high-temperature TPD") capable of increasing a temperature up to 1,600°C. That is, in the embodiment of the present invention, the total amount of carbon edge sites of the carbon catalyst is calculated from the results of desorbed gas quantitative determination of the high-temperature TPD of the carbon catalyst with a temperature programmed desorption analyzer (hereinafter referred to as "high-temperature TPD analyzer") capable of increasing a temperature up to 1,600°C, and the average carbon network plane size L determined from the amount is calculated with a coronene model shown in FIG. 1. In the equation shown in FIG. 1, a₀ represents the lattice constant of a graphite crystal in the a-axis direction, which is 0.2461 nm.

The average carbon network plane size L of the catalyst of the present invention is not particularly limited as long as the effect of the present invention is obtained. However, the average carbon network plane size L may be, for example, 5 nm or more, and is more preferably 10 nm or more, still more preferably 15 nm or more, still more preferably 20 nm or more, still more preferably 25 nm or more, still more preferably 30 nm or more, still more preferably 32 nm or more, still more preferably 35 nm or more, still more preferably 37 nm or more, still more preferably 40 nm or more, still more preferably 43 nm or more, still more preferably 46 nm or more, and particularly preferably 49 nm or more.

The average carbon network plane size L of the catalyst of the present invention may be, for example, 5,000 nm or less, 2,000 nm or less, 1,000 nm or less, 500 nm or less, 400 nm or less, 300 nm or less, 200 nm or less, 100 nm or less, 90 nm or less, 80 nm or less, 70 nm or less, or 60 nm or less. The average carbon network plane size L of the catalyst of the present invention may be specified by freely combining any one of the above-mentioned lower limit values and any one of the above-mentioned upper limit values.

The average carbon network plane size L contributes to improvements in catalytic activity and durability of the catalyst of the present invention. That is, for example, a carbon structure having a relatively large average carbon network plane size L contributes to an effective improvement in durability due to a decrease in edge site of its carbon network plane, which may serve as a starting point of deterioration.

The crystallite size La is obtained from the diffraction peak in the vicinity of a diffraction angle (2θ) of 43° in the X-ray diffraction pattern of the carbon catalyst obtained by powder X-ray diffraction using a CuKα ray. Herein, when the carbon catalyst has a structure in which carbon hexagonal network planes are connected to extend in its a-axis direction among crystallites forming curved carbon network planes that contribute to its catalytic activity, a diffraction peak f₁₀, which is the (10) diffraction line of carbon having a peak top in the vicinity of a diffraction angle (2θ) of 43° (e.g., in the range of from 35° or more to 60° and less), appears in the X-ray diffraction pattern of the carbon catalyst using a CuKα ray. The diffraction peak f₁₀ is defined as, for example, a diffraction peak having a diffraction angle (2θ) of 43.5°±1.0° and having a full width at half maximum of 7.5°±6.5°.

When the carbon catalyst contains iron, a diffraction peak derived from iron may also appear in the vicinity of a diffraction angle (2θ) of 43°. That is, in this case, a diffraction peak f_{Fe}, which is a diffraction line derived from iron, is mixed with the above-mentioned diffraction peak f₁₀ in a diffraction line derived from the carbon structure of the carbon catalyst. In view of the foregoing, with regard to the carbon catalyst containing iron, the diffraction peak in the vicinity of a diffraction angle (2θ) of 43° is separated into two diffraction peaks, that is, the f₁₀ and the f_{Fe} peaks, by such peak separation of an X-ray diffraction pattern as performed in Examples to be described later.

The crystallite size La is calculated by analyzing the diffraction peak f₁₀. That is, the crystallite size La (nm) is calculated by substituting the Bragg angle and full width at half maximum of the diffraction peak f₁₀ into the following Scherrer equation: La=Kλ/(βcosθ). In the Scherrer equation, K represents a Scherrer constant (0.94), λ represents the wavelength of the CuKα ray (0.15418 nm), β represents the full width at half maximum (radian), and θ represents the Bragg angle (radian).

The crystallite size La of the catalyst of the present invention is not particularly limited as long as the effect of the present invention is obtained. However, the crystallite size La may be, for example, 10.00 nm or less, and is preferably 5.00 nm or less, more preferably 4.00 nm or less, still more preferably 3.00 nm or less, still more preferably 2.50 nm or less, still more preferably 2.30 nm or less, still more preferably 2.00 nm or less, still more preferably 1.90 nm or less, still more preferably 1.80 nm or less, still more preferably 1.70 nm or less, still more preferably 1.60 nm or less, and particularly preferably 1.50 nm or less.

The crystallite size La of the catalyst of the present invention may be, for example, 0.50 nm or more, 0.70 mm or more, 1.00 nm or more, 1.10 nm or more, 1.20 nm or more, 1.30 nm or more, 1.40 nm or more, 1.50 nm or more, or 1.60 nm or more. The crystallite size La of the catalyst of the present invention may be specified by freely combining any one of the above-mentioned lower limit values and any one of the above-mentioned upper limit values.

The crystallite size La contributes to an improvement in catalytic activity of the catalyst of the present invention. That is, for example, a carbon structure having a relatively large average carbon network plane size L and having a relatively small crystallite size La contributes to an effective improvement in catalytic activity due to an increase in curved portion of its carbon network plane serving as a catalytic active site.

The crystallite size Lc is obtained from a diffraction peak in the vicinity of a diffraction angle (2θ) of 26° in the X-ray diffraction pattern of the carbon catalyst obtained by powder X-ray diffraction using a CuKα ray. Specifically, the crystallite size Lc is obtained from a diffraction peak f₀₀₂, which is the (002) diffraction line of carbon having a peak top in the vicinity of a diffraction angle 2θ of 26° (e.g., in the range of from 24.0° or more to 26.5° or less) in the X-ray diffraction pattern obtained by the powder X-ray diffraction using a CuKα ray. The diffraction peak f₀₀₂ is defined as, for example, a diffraction peak having a diffraction angle (2θ) of 25.0° or more and 26.5° or less, and having a full width at half maximum of 0.05° or more and 20° or less.

The crystallite size Lc is calculated by analyzing the diffraction peak f₀₀₂. That is, the crystallite size Lc (nm) is calculated by substituting the Bragg angle and full width at half maximum of the diffraction peak f₀₀₂ into the following Scherrer equation: Lc=Kλ/(βcosθ). In the Scherrer equation, K represents a Scherrer constant (0.94), λ represents the wavelength of the CuKα ray (0.15418 nm), β represents the full width at half maximum (radian), and θ represents the Bragg angle (radian).

The crystallite size Lc of the catalyst of the present invention is not particularly limited as long as the effect of the present invention is obtained. However, the crystallite size Lc may be, for example, 10.00 nm or less, and is preferably 5.00 nm or less, more preferably 4.00 nm or less, still more preferably 3.00 nm or less, still more preferably 2.50 nm or less, still more preferably 2.00 nm or less, still more preferably 1.80 nm or less, still more preferably 1.50 nm or less, still more preferably 1.40 nm or less, still more preferably 1.30 nm or less, particularly preferably 1.25 nm or less.

The crystallite size Lc of the catalyst of the present invention may be, for example, 0.50 nm or more, 0.70 nm or more, 0.80 nm or more, 0.90 nm or more, 1.00 nm or more, or 1.10 nm or more. The crystallite size Lc of the catalyst of the present invention may be specified by freely combining any one of the above-mentioned lower limit values and any one of the above-mentioned upper limit values.

The catalyst of the present invention contains a halogen atom. That is, the catalyst of the present invention has a ratio (hereinafter referred to as "halogen/C ratio") of a halogen atom concentration (at%) to a carbon atom concentration (at%), which is obtained by X-ray photoelectron spectroscopy (hereinafter referred to as "XPS"), of 0.0005 or more.

The halogen/C ratio of the catalyst of the present invention is, for example, preferably 0.0010 or more, more preferably 0.0030 or more, still more preferably 0.0050 or more, still more preferably 0.0080 or more, still more preferably 0.0100 or more, still more preferably 0.0110 or more, still more preferably 0.0120 or more, still more preferably 0.0130 or more, still more preferably 0.0140 or more, and particularly preferably 0.0145 or more.

The upper limit value of the halogen/C ratio of the catalyst of the present invention is not particularly limited as long as the effect of the present invention is obtained. However, the upper limit value may be, for example, 0.1000 or less, 0.0700 or less, 0.0500 or less, 0.0450 or less, 0.0400 or less, 0.0350 or less, 0.0300 or less, 0.0250 or less, 0.0200 or less, 0.0190 or less, 0.0180 or less, 0.0170 or less, or 0.0160 or less. The halogen/C ratio of the catalyst of the present invention may be specified by freely combining any one of the above-mentioned lower limit values and any one of the above-mentioned upper limit values.

The halogen atom in the catalyst of the present invention is not particularly limited as long as the effect of the present invention is obtained. However, the halogen atom is preferably, for example, one or more selected from the group consisting of: a fluorine atom; a chlorine atom; a bromine atom; and an iodine atom. In Examples to be described later, a chlorine atom is used as the halogen atom. However, regardless of whether they are chlorine atoms, halogen atoms have the following feature in common: each of the atoms has seven valence electrons in its outermost shell, and forms a single bond with a carbon atom present at an edge site of a carbon network plane in the carbon structure of the carbon catalyst to form a closed shell structure.

The halogen/C ratio of the catalyst of the present invention is calculated by dividing the halogen atom concentration (at%) of the catalyst of the present invention obtained by its XPS by the carbon atom concentration (at%) thereof. In this regard, when the catalyst of the present invention contains two or more kinds of halogen atoms, the halogen atom concentration (at%) of the catalyst of the present invention is a total of the concentrations (at%) of the two or more kinds of halogen atoms obtained by XPS.

The halogen/C ratio contributes to improvements in catalytic activity and durability of the catalyst of the present invention. That is, for example, an increase in halogen/C ratio in the carbon structure contributes to an effective improvement in durability thereof due to an increase in the edge sites to which halogen atoms are bonded among edge sites of the carbon network plane in the carbon structure.

Herein, the amount of halogen atoms introduced into the carbon structure is related to the amount of the edge sites in the carbon structure. That is, in the case of, for example, a carbon structure having a relatively large average carbon network plane size L, the number of the edge sites of the carbon network plane in the carbon structure is small. Accordingly, the halogen/C ratio of the carbon catalyst is not very large.

The halogen atom concentration of the catalyst of the present invention obtained by its XPS is not particularly limited as long as the effect of the present invention is obtained. However, the concentration may be, for example, 0.10 (at%) or more, and is preferably 0.20 (at%) or more, more preferably 0.30 (at%) or more, still more preferably 0.40 (at%) or more, still more preferably 0.50 (at%) or more, still more preferably 0.60 (at%) or more, still more preferably 0.70 (at%) or more, still more preferably 0.80 (at%) or more, still more preferably 0.90 (at%) or more, still more preferably 1.00 (at%) or more, still more preferably 1.05 (v) or more, still more preferably 1.10 (at%) or more, still more preferably 1.15 (at%) or more, still more preferably 1.20 (at%) or more, still more preferably 1.25 (at%) or more, and particularly preferably 1.30 (at%) or more.

The halogen atom concentration of the catalyst of the present invention obtained by the XPS may be, for example, 15.00 (at%) or less, 10.00 (at%) or less, 7.00 (at%) or less, 5.00 (at%) or less, 3.50 (at%) or less, 3.00 (at%) or less, 2.50 (at%) or less, 2.00 (at%) or less, 1.70 (at%) or less, or 1.50 (at%) or less. The halogen atom concentration of the catalyst of the present invention obtained by the XPS may be specified by freely combining any one of the above-mentioned lower limit values and any one of the above-mentioned upper limit values.

The halogen atom concentration obtained by the XPS contributes to an improvement in durability of the catalyst of the present invention. That is, for example, an increase in halogen atom concentration in the carbon structure of the carbon catalyst contributes to an effective improvement in durability thereof due to an increase in the edge sites to which halogen atoms are bonded among edge sites of the carbon network plane in the carbon structure.

As described above, the amount of halogen atoms introduced into the carbon structure is related to the amount of the edge sites in the carbon structure. Accordingly, in the case of, for example, a carbon structure having a relatively large average carbon network plane size L, the number of the edge sites of the carbon network plane in the carbon structure is small. Accordingly, the halogen atom concentration of the carbon catalyst does not become very large.

The catalyst of the present invention preferably contains a nitrogen atom. That is, the catalyst of the present invention preferably contains a nitrogen atom doped into the carbon structure. Specifically, the catalyst of the present invention may have a ratio (hereinafter referred to as "N/C ratio") of a nitrogen atom concentration (at%) to a carbon atom concentration (at%), which is obtained by XPS, of 0.0005 or more.

In this case, the N/C ratio of the catalyst of the present invention is, for example, preferably 0.0010 or more, more preferably 0.0050 or more, still more preferably 0.0100 or more, still more preferably 0.0130 or more, still more preferably 0.0150 or more, and particularly preferably 0.0170 or more.

The N/C ratio of the catalyst of the present invention may be, for example, 0.3000 or less, 0.2000 or less, 0.1000 or less, 0.0700 or less, 0.0500 or less, or 0.0400 or less. The N/C ratio of the catalyst of the present invention may be specified by freely combining any one of the above-mentioned lower limit values and any one of the above-mentioned upper limit values.

The N/C ratio contributes to improvements in catalytic activity and durability of the catalyst of the present invention. That is, for example, an increase in N/C ratio in the carbon structure of the carbon catalyst contributes to an effective improvement in catalytic activity thereof due to an increase in catalytic active sites derived from nitrogen atoms in the carbon structure.

The nitrogen atom concentration of the catalyst of the present invention obtained by its XPS is not particularly limited as long as the effect of the present invention is obtained. However, the concentration may be, for example, 0.05 (at%) or more, and is preferably 0.10 (at%) or more, more preferably 0.30 (at%) or more, still more preferably 0.50 (at%) or more, still more preferably 0.70 (at%) or more, still more preferably 1.00 (at%) or more, still more preferably 1.10 (at%) or more, still more preferably 1.20 (at%) or more, still more preferably 1.30 (at%) or more, still more preferably 1.40 (at%) or more, still more preferably 1.50 (at%) or more, still more preferably 1.60 (at%) or more, still more preferably 1.70 (at%) or more, and particularly preferably 1.80 (at%) or more.

The nitrogen atom concentration of the catalyst of the present invention obtained by the XPS may be, for example, 30.00 (at%) or less, 25.00 (at%) or less, 20.00 (at%) or less, 15.00 (at%) or less, 10.00 (at%) or less, 7.00 (at%) or less, 5.00 (at%) or less, 4.00 (at%) or less, or 3.00 (at%) or less. The nitrogen atom concentration of the catalyst of the present invention obtained by the XPS may be specified by freely combining any one of the above-mentioned lower limit values and any one of the above-mentioned upper limit values.

The nitrogen atom concentration obtained by the XPS contributes to improvements in catalytic activity and durability of the catalyst of the present invention. That is, for example, an increase in nitrogen atom concentration in the carbon structure of the carbon catalyst contributes to an effective improvement in catalytic activity thereof due to an increase in catalytic active sites derived from nitrogen atoms in the carbon structure.

The catalyst of the present invention may have a percentage (hereinafter referred to as a "quaternary nitrogen percentage") of the area of a quaternary nitrogen atom peak to the total area (i.e., the total of the area of a pyridinic nitrogen atom peak, the area of a pyrrolic/pyridonic nitrogen atom peak, the area of the quaternary nitrogen atom peak, and the area of an oxidized nitrogen atom peak) of the following four nitrogen atom peaks of 0.1% or more. The quaternary nitrogen percentage is obtained by subjecting an N1s spectrum in a spectrum obtained by XPS to peak separation into the four nitrogen atom peaks: (1) the pyridinic nitrogen atom peak (peak derived from a pyridinic nitrogen atom) having a peak top in the range of 398.5±0.3 eV and having a full width at half maximum of 1.4 eV; (2) the pyrrolic/pyridonic nitrogen atom peak (peak derived from a pyrrolic nitrogen atom and a pyridonic nitrogen atom) having a peak top in the range of 400.5±0.3 eV and having a full width at half maximum of 1.4 eV; (3) the quaternary nitrogen atom peak (peak derived from a quaternary nitrogen atom) having a peak top in the range of 401.5±0.3 eV and having a full width at half maximum of 1.4 eV; and (4) the oxidized nitrogen atom peak (peak derived from an oxidized nitrogen atom) having a peak top in the range of 402.5±0.3 eV and having a full width at half maximum of 2.0 eV.

In this case, the quaternary nitrogen percentage of the catalyst of the present invention is, for example, preferably 1.0% or more, more preferably 2.0% or more, still more preferably 3.0% or more, still more preferably 4.0% or more, still more preferably 5.0% or more, still more preferably 6.0% or more, still more preferably 7.0% or more, still more preferably 8.0% or more, still more preferably 10.0% or more, still more preferably 12.0% or more, still more preferably 14.0% or more, still more preferably 16.0% or more, still more preferably 18.0% or more, and particularly preferably 20.0% or more.

The quaternary nitrogen percentage of the catalyst of the present invention may be, for example, 70.0% or less, 60.0% or less, 50.0% or less, 45.0% or less, 40.0% or less, 35.0% or less, or 30.0% or less. The quaternary nitrogen percentage of the catalyst of the present invention may be specified by freely combining any one of the above-mentioned lower limit values and any one of the above-mentioned upper limit values.

Herein, pyridinic nitrogen atoms, pyrrolic/pyridonic nitrogen atoms, and oxidized nitrogen atoms are mainly present at the edge sites of the carbon network plane in the carbon structure of the carbon catalyst, while quaternary nitrogen atoms are present within the carbon network plane.

The quaternary nitrogen percentage contributes to improvements in catalytic activity and durability of the catalyst of the present invention. That is, for example, an increase in quaternary nitrogen percentage in the carbon structure contributes to an effective improvement in catalytic activity due to an increase in electron density of a curved portion of the carbon network plane caused by the quaternary nitrogen atoms doped into the carbon network plane in the carbon structure.

The catalyst of the present invention may have a percentage (hereinafter referred to as "pyridinic nitrogen percentage") of the area of the pyridinic nitrogen atom peak to the total area of the above-mentioned four nitrogen atom peaks (1) to (4) of 50.0% or less, the pyridinic nitrogen percentage being obtained by subjecting the N1s spectrum in the spectrum obtained by the XPS to peak separation into the four nitrogen atom peaks.

In this case, the pyridinic nitrogen percentage of the catalyst of the present invention is, for example, preferably 45.0% or less, more preferably 40.0% or less, still more preferably 35.0% or less, and particularly preferably 30.0% or less.

The pyridinic nitrogen percentage of the catalyst of the present invention may be, for example, 1.0% or more, 3.0% or more, 5.0% or more, 7.0% or more, 9.0% or more, or 10.0% or more. The pyridinic nitrogen percentage of the catalyst of the present invention may be specified by freely combining any one of the above-mentioned lower limit values and any one of the above-mentioned upper limit values.

The catalyst of the present invention may have a percentage (hereinafter referred to as "pyrrolic/pyridonic nitrogen percentage") of the area of the pyrrolic/pyridonic nitrogen atom peak to the total area of the above-mentioned four nitrogen atom peaks (1) to (4) of 70.0% or less, the pyrrolic/pyridonic nitrogen percentage being obtained by subjecting the N1s spectrum in the spectrum obtained by the XPS to peak separation into the four nitrogen atom peaks.

In this case, the pyrrolic/pyridonic nitrogen percentage of the catalyst of the present invention may be, for example, 65.0% or less, 60.0% or less, 55.0% or less, 50.0% or less, 45.0% or less, 40.0% or less, or 35.0% or less.

The pyrrolic/pyridonic nitrogen percentage of the catalyst of the present invention may be, for example, 1.0% or more, 5.0% or more, 10.0% or more, 15.0% or more, 20.0% or more, 25.0% or more, or 30.0% or more. The pyrrolic/pyridonic nitrogen percentage of the catalyst of the present invention may be specified by freely combining any one of the above-mentioned lower limit values and any one of the above-mentioned upper limit values.

The catalyst of the present invention may have a percentage (hereinafter referred to as "oxidized nitrogen percentage") of the area of the oxidized nitrogen atom peak to the total area of the above-mentioned four nitrogen atom peaks (1) to (4) of 1.0% or more, the oxidized nitrogen percentage being obtained by subjecting the N1s spectrum in the spectrum obtained by the XPS to peak separation into the four nitrogen atom peaks.

In this case, the oxidized nitrogen percentage of the catalyst of the present invention is, for example, preferably 5.0% or more, more preferably 10.0% or more, still more preferably 15.0% or more, particularly preferably 18.0% or more.

The oxidized nitrogen percentage of the catalyst of the present invention may be, for example, 50.0% or less, 45.0% or less, 40.0% or less, 35.0% or less, 30.0% or less, or 25.0% or less. The oxidized nitrogen percentage of the catalyst of the present invention may be specified by freely combining any one of the above-mentioned lower limit values and any one of the above-mentioned upper limit values.

The carbon atom concentration of the catalyst of the present invention obtained by its XPS is not particularly limited as long as the effect of the present invention is obtained. However, the concentration may be, for example, 50.0 (at%) or more, and is preferably 60.0 (at%) or more, more preferably 70.0 (at%) or more, more preferably 75.0 (at%) or more, still more preferably 80.0 (at%) or more, and particularly preferably 85.0 (at%) or more.

The carbon atom concentration of the catalyst of the present invention obtained by the XPS may be, for example, 99.0 (at%) or less, 98.0 (at%) or less, 97.0 (at%) or less, 96.0 (at%) or less, 95.0 (at%) or less, 94.0 (at%) or less, or 93.0 (at%) or less. The carbon atom concentration of the catalyst of the present invention obtained by the XPS may be specified by freely combining any one of the above-mentioned lower limit values and any one of the above-mentioned upper limit values.

The catalyst of the present invention may contain an oxygen atom. In this case, the oxygen atom concentration of the catalyst of the present invention obtained by its XPS may be, for example, 1.0 (at%) or more, 2.0 (at%) or more, 3.0 (at%) or more, 4.0 (at%) or more, or 5.0 (at%) or more.

The oxygen atom concentration of the catalyst of the present invention obtained by the XPS may be, for example, 35.0 (at%) or less, 30.0 (at%) or less, 25.0 (at%) or less, 20.0 (at%) or less, 15.0 (at%) or less, or 10.0 (at%) or less. The oxygen atom concentration of the catalyst of the present invention obtained by the XPS may be specified by freely combining any one of the above-mentioned lower limit values and any one of the above-mentioned upper limit values.

The BET specific surface area of the catalyst of the present invention obtained by a nitrogen adsorption method is not particularly limited as long as the effect of the present invention is obtained. However, the BET specific surface area is, for example, preferably 50 m²/g or more, more preferably 100 m²/g or more, still more preferably 200 m²/g or more, still more preferably 300 m²/g or more, still more preferably 400 m²/g or more, still more preferably 450 m²/g or more, still more preferably 500 m²/g or more, and particularly preferably 550 m²/g or more.

The BET specific surface area of the catalyst of the present invention may be, for example, 4,000 m²/g or less, 3,000 m²/g or less, 3,500 m²/g or less, 2,000 m²/g or less, 1,500 m²/g or less, 1,000 m²/g or less, 900 m²/g or less, or 800 m²/g or less. The BET specific surface area of the catalyst of the present invention may be specified by freely combining any one of the above-mentioned lower limit values and any one of the above-mentioned upper limit values.

The BET specific surface area contributes to improvements in catalytic activity and durability of the catalyst of the present invention. That is, for example, an increase in BET specific surface area contributes to an improvement in catalytic activity because the increase improves contact efficiency between the carbon structure in the carbon catalyst and a reaction active substance.

The catalyst of the present invention may contain a metal (hereinafter referred to as "non-noble metal") other than noble metals (i.e., ruthenium (Ru), palladium (Pd), rhodium (Rh), silver (Ag), osmium (Os), iridium (Ir), platinum (Pt), and gold (Au)).

The non-noble metal in the catalyst of the present invention is not particularly limited as long as the effect of the present invention is obtained. However, the non-noble metal may be, for example, a non-noble metal belonging to any one of Groups 2 to 14 of the periodic table of elements, and is preferably a non-noble metal belonging to any one of the third period to fifth period of Groups 2 to 14 of the periodic table of elements, and more preferably a non-noble metal belonging to any one of the third period and fourth period of Groups 2 to 14 of the periodic table of elements.

Specifically, the non-noble metal in the catalyst of the present invention is, for example, more preferably one or more kinds selected from the group consisting of: magnesium (Mg); aluminum (Al); calcium (Ca); titanium (Ti); manganese (Mn); iron (Fe); cobalt (Co); nickel (Ni); copper (Cu); zinc (Zn); yttrium (Y); zirconium (Zr); niobium (Nb); molybdenum (Mo); and tin (Sn), and particularly preferably one or more selected from the group consisting of: Cu; Zn; and Sn.

The catalyst of the present invention may contain a non-noble metal derived from a raw material for carbonization in the production thereof. That is, as described below, a method of producing the catalyst of the present invention may include carbonizing a raw material containing a non-noble metal. In this case, the catalyst of the present invention contains the non-noble metal because the raw material for carbonization originally contains the non-noble metal.

Specifically, the catalyst of the present invention contains the non-noble metal inside a skeleton forming a porous structure of the catalyst. That is, even when the catalyst of the present invention is a carbonized material produced through carbonization followed by metal removal treatment to be described later, the non-noble metal derived from the raw material for carbonization remains inside the skeleton of the catalyst of the present invention. In this regard, the weight of the non-noble metal inside the skeleton of the catalyst of the present invention, among the non-noble metals in the catalyst of the present invention, may be larger than the weight of the non-noble metal in the surface of the skeleton of the catalyst of the present invention.

The non-noble metal inside the skeleton of the catalyst of the present invention may be detected by, for example, subjecting the skeleton to surface etching treatment and analyzing a cross-section exposed by the etching treatment. That is, in this case, when one particle of the catalyst of the present invention is subjected to etching treatment, the non-noble metal is detected in a cross-section of the particle exposed by the etching treatment. The non-noble metal in the catalyst of the present invention may be detected by, for example, inductively coupled plasma (ICP) atomic emission spectroscopy of the catalyst of the present invention.

The content of the non-noble metal of the catalyst of the present invention (the total of the contents of a plurality of kinds of non-noble metals when the catalyst of the present invention contains the plurality of kinds of non-noble metals) is not particularly limited as long as the effect of the present invention is obtained. However, the content may be, for example, 50 ppm or more, 100 ppm or more, 500 ppm or more, 1,000 ppm or more, 5,000 ppm or more, 10,000 ppm or more, 50,000 ppm or more, or 100,000 ppm or more.

The content of the non-noble metal of the catalyst of the present invention may be, for example, 500,000 ppm or less, 400,000 ppm or less, 300,000 ppm or less, 200,000 ppm or less, 100,000 ppm or less, 50,000 ppm or less, or 30,000 ppm or less. The content of the non-noble metal of the catalyst of the present invention may be specified by freely combining any one of the above-mentioned lower limit values and any one of the above-mentioned upper limit values. 1 ppm means 0.0001 wt%. The content of the non-noble metal is obtained by inductively coupled plasma (ICP) atomic emission spectroscopy.

The non-noble metal atom concentration of the catalyst of the present invention (the total of the atom concentrations of a plurality of kinds of non-noble metals when the catalyst of the present invention contains the plurality of kinds of non-noble metals) obtained by its XPS may be, for example, 0.001 (at%) or more, 0.005 (at%) or more, or 0.010 (at%) or more.

The non-noble metal atom concentration of the catalyst of the present invention obtained by the XPS may be, for example, 30.000 (at%) or less, 25.000 (at%) or less, 20.000 (at%) or less, 15.000 (at%) or less, 10.000 (at%) or less, 5.000 (at%) or less, 2.000 (at%) or less, 1.000 (at%) or less, 0.500 (at%) or less, 0.100 (at%) or less, 0.050 (at%) or less, 0.030 (at%) or less, or 0.020 (at%) or less. The non-noble metal atom concentration of the catalyst of the present invention obtained by the XPS may be specified by freely combining any one of the above-mentioned lower limit values and any one of the above-mentioned upper limit values.

The non-noble metal in the catalyst of the present invention contributes to an improvement in catalytic activity of the catalyst of the present invention in a production process thereof. That is, for example, when the catalyst of the present invention contains a non-noble metal derived from a raw material for carbonization, a specific carbon structure including a catalytic active site can be effectively formed by performing the carbonization in the presence of the non-noble metal.

However, the catalytic activity of the catalyst of the present invention may be mainly based on a catalytic active site in its carbon structure rather than a non-noble metal derived from a raw material therefor. This is supported by the following fact. Even when the catalyst of the present invention containing the non-noble metal derived from the raw material for carbonization is subjected to metal removal treatment for reducing the content of the non-noble metal, the catalytic activity of the catalyst of the present invention after the metal removal treatment is not significantly reduced compared to that before the metal removal treatment.

The content of a metal other than Mg, Al, Ca, Ti, Mn, Fe, Co, Ni, Cu, Zn, Y, Zr, Nb, Mo, and Sn, the content of a metal other than Fe, Cu, Zn, and Sn, or the content of a metal other than Cu, Zn, and Sn in the catalyst of the present invention may be, for example, 30,000 ppm or less, 25,000 ppm or less, 20,000 ppm or less, 15,000 ppm or less, 10,000 ppm or less, 5,000 ppm or less, 3,000 ppm or less, 2,000 ppm or less, 1,000 ppm or less, 500 ppm or less, 300 ppm or less, 200 ppm or less, 100 ppm or less, or 50 ppm or less. The content of the non-noble metal is obtained by inductively coupled plasma (ICP) atomic emission spectroscopy.

The catalyst of the present invention may be free of any noble metal. That is, as described above, the catalyst of the present invention itself exhibits catalytic activity without including a noble metal supported thereon, and hence it is not required that the catalyst include a noble metal. However, the catalyst of the present invention may be used as a carbon carrier for supporting a metal catalyst such as a noble metal.

A method of producing the catalyst of the present invention is not particularly limited as long as the catalyst of the present invention having the above-mentioned characteristics is obtained by the method. However, the method is preferably, for example, a method including: carbonizing a raw material containing an organic substance; and subjecting a carbonized material obtained by the carbonization to halogen introduction treatment.

The organic substance in the raw material is not particularly limited as long as the organic substance can be carbonized. An organic compound in the organic substance may be a polymer (e.g., a thermosetting resin and/or a thermoplastic resin), and/or may be an organic compound having a smaller molecular weight.

The organic substance is preferably a nitrogen-containing organic substance. The nitrogen-containing organic substance includes, for example, a nitrogen-containing organic compound. The nitrogen-containing organic compound is not particularly limited as long as the organic compound contains a nitrogen atom in its molecule. A nitrogen atom content in the nitrogen-containing organic compound is not particularly limited as long as the effect of the present invention is obtained. For example, a nitrogen-containing organic compound in which the nitrogen atom content falls within a range suitable for obtaining the catalyst of the present invention having the above-mentioned characteristics may be appropriately selected and used.

Specific examples of the organic substance may include one or more selected from the group consisting of: quinoxaline (e.g., 2-hydroxyquinoxaline); phenanthroline (e.g., 1,10-phenanthroline); an alginate (e.g., ammonium alginate); polyacrylonitrile; a polyacrylonitrile-polyacrylic acid copolymer; a polyacrylonitrile-polymethyl acrylate copolymer; a polyacrylonitrile-polymethacrylic acid copolymer; a polyacrylonitrile-polymethacrylic acid-polymethallyl sulfonic acid copolymer; a polyacrylonitrile-polymethyl methacrylate copolymer; a phenol resin; polyfurfuryl alcohol; furan; a furan resin; a phenol formaldehyde resin; melamine; a melamine resin; an epoxy resin; a nitrogen-containing chelate resin (e.g., one or more kinds selected from the group consisting of: a polyamine-type resin; an iminodiacetic acid-type resin; an amino phosphoric acid-type resin; and an aminomethylphosphonic acid-type resin); a polyamide imide resin; pyrrole; polypyrrole; polyvinylpyrrole; 3-methylpolypyrrole; acrylonitrile; polyvinylidene chloride; thiophene; oxazole; thiazole; pyrazole; vinylpyridine; polyvinylpyridine; pyridazine; pyrimidine; piperazine; pyrane; morpholine; imidazole; 1-methylimidazole; 2-methylimidazole; aniline; polyaniline; succinic acid dihydrazide; adipic acid dihydrazide; polysulfone; polyaminobismaleimide; polyimide; polyvinyl alcohol; polyvinyl butyral; benzimidazole; polybenzimidazole; polyamide; polyester; polylactic acid; polyether; polyether ether ketone; cellulose; carboxymethyl cellulose; lignin; chitin; chitosan; pitch; silk; wool; polyamino acid; a nucleic acid; DNA; RNA; hydrazine; hydrazide; urea; salen; polycarbazole; polybismaleimide; triazine; polyacrylic acid; a polyacrylic acid ester; a polymethacrylic acid ester; polymethacrylic acid; polyurethane; polyamidoamine; polycarbodiimide; naphthalene; a naphthalene analog; anthracene; an anthracene analog; hydroxybenzene; a hydroxybenzene analog; carbazole; quinoline; cyanuric acid; naphthoic acid; methylene blue; and phthalocyanine.

The carbonization is performed by heating the raw material at a temperature at which the organic substance in the raw material is carbonized. The carbonizing temperature is not particularly limited as long as the raw material is carbonized at the temperature. The carbonizing temperature may be, for example, 400°C or more, and is preferably 500°C or more, more preferably 550°C or more, still more preferably 600°C or more, and particularly preferably 620°C or more.

The carbonizing temperature may be, for example, 3,000°C or less, and is preferably 2,500°C or less, more preferably 2,000°C or less, still more preferably 1,500°C or less, and particularly preferably 1,200°C or less. The carbonizing temperature may be specified by freely combining any one of the above-mentioned lower limit values and any one of the above-mentioned upper limit values. A temperature increase rate up to the carbonizing temperature is not particularly limited, and may be, for example, 0.5°C/min or more and 300°C/min or less. The carbonization is preferably performed in an inert atmosphere such as a nitrogen atmosphere.

The halogen introduction treatment is treatment for introducing a halogen atom into the carbon structure of the carbonized material obtained by the carbonization. Specifically, the halogen introduction treatment is performed, for example, by bringing the carbonized material into contact with a halogen-containing gas while heating the carbonized material. The content of a halogen gas in the halogen-containing gas is not particularly limited as long as the effect of the halogen introduction treatment is obtained. However, the content is, for example, preferably 1 vol% or more, more preferably 5 vol% or more, and particularly preferably 10 vol% or more. A gas mixed with the halogen gas in the halogen-containing gas is not particularly limited as long as the effect of the halogen introduction treatment is obtained. However, the gas is preferably an inert gas (e.g., an argon gas and/or a nitrogen gas). A heating temperature in the halogen introduction treatment is not particularly limited as long as the effect of the halogen introduction treatment is obtained. However, the temperature is, for example, preferably 100°C or more, more preferably 300°C or more, more preferably 500°C or more, and particularly preferably 600°C or more.

The method of producing the catalyst of the present invention is preferably, for example, a method including: carbonizing a raw material containing an organic substance and a non-noble metal; and subjecting a carbonized material obtained by the carbonization to halogen introduction treatment. In this case, the method of producing the catalyst of the present invention may be a method including: carbonizing the raw material containing the organic substance and the non-noble metal; subjecting the carbonized material obtained by the carbonization to metal removal treatment; and subjecting the carbonized material after the metal removal treatment to halogen introduction treatment. The metal removal treatment is treatment for reducing the amount of a raw material-derived non-noble metal in the carbonized material. Specifically, the metal removal treatment is preferably, for example, washing treatment with an acid and/or electrolytic treatment.

An electrode according to an embodiment of the present invention (hereinafter referred to as "electrode of the present invention") includes the catalyst of the present invention. That is, the electrode of the present invention may include an electrode base material and the catalyst of the present invention supported on the electrode base material. The electrode of the present invention is preferably a battery electrode. Specifically, the electrode of the present invention is preferably, for example, an electrode for a fuel cell (e.g., a polymer electrolyte fuel cell or a microbial fuel cell), an air cell, a water electrolyzer (e.g., a polymer electrolyte water electrolyzer), a redox flow battery, or a halogen battery.

The electrode of the present invention may be a cathode or an anode, but is preferably a cathode. That is, the electrode of the present invention is a cathode or an anode of a fuel cell, an air cell, a water electrolyzer, a redox flow battery, or a halogen battery, preferably a cathode thereof.

A battery according to an embodiment of the present invention (hereinafter referred to as "battery of the present invention") includes the electrode of the present invention. Specifically, the battery of the present invention is preferably a fuel cell (e.g., a polymer electrolyte fuel cell or a microbial fuel cell), an air cell, a redox flow battery, or a halogen battery including the electrode of the present invention. The battery of the present invention is preferably a membrane electrode assembly (MEA) including the electrode of the present invention.

The battery of the present invention is a battery including the electrode of the present invention as a cathode or an anode, preferably a battery including the electrode of the present invention as a cathode. That is, the battery of the present invention is a fuel cell, an air cell, a redox flow battery, or a halogen battery including the electrode of the present invention as a cathode or an anode, preferably a fuel cell, an air cell, a redox flow battery, or a halogen battery including the electrode of the present invention as a cathode.

Next, specific Examples according to the embodiments of the present invention will be described.

### Examples

### [Example 1]

1.0 g of 2-hydroxyquinoxaline was dissolved in 20 mL of acetone, and 25.95 g of tin(II) chloride (SnCl₂) was further added thereto, followed by mixing with a mortar so that the mixture became homogeneous. Thus, a raw material for carbonization was obtained.

Then, carbonization was performed. That is, the resultant raw material was loaded into an HB tube, and its temperature was increased to 650°C in a Siliconit furnace at a rate of 50°C/min under a nitrogen atmosphere, followed by the holding of the raw material at 650°C for 30 minutes to perform carbonization.

Subsequently, the carbonized material obtained by the carbonization was subjected to pulverization treatment. That is, silicon nitride balls each having a diameter of 10 mm were set in a planetary ball mill (P-7, manufactured by Fritsch Japan Co., Ltd.), and the carbonized material was pulverized with the planetary ball mill.

Further, the carbonized material was subjected to metal removal treatment. That is, 100 mL of concentrated hydrochloric acid was added to the pulverized carbonized material, and the mixture was heated to 80°C and stirred for 2 hours. After that, the solution containing the carbonized material was filtered with a filtration membrane, and the carbonized material was washed with distilled water until a filtrate became neutral. The collected carbonized material was dried in a vacuum.

After that, the carbonized material was subjected to heat treatment. That is, the carbonized material subjected to the metal removal treatment was loaded into a quartz tube, heated in an image furnace under a nitrogen atmosphere, and held at 1,000°C for 30 minutes to perform heat treatment. Thus, a carbon catalyst was obtained.

Further, the carbon catalyst was subjected to halogen introduction treatment. That is, the carbon catalyst obtained as described above was loaded into a quartz tube, and its temperature was increased to 600°C at a temperature increase rate of 50°C/min in a chlorine atmosphere (mixed gas containing 10 vol% of a chlorine gas and 90 vol% of an argon gas) in an image furnace, followed by the holding of the carbon catalyst at 600°C for 30 minutes.

After that, the chlorine atmosphere was switched to an argon atmosphere (100 vol% of an argon gas) while the temperature was held at 600°C, followed by the holding of the carbon catalyst at 600°C for 10 minutes in the argon atmosphere. Thus, a carbon catalyst of Example 1 was obtained.

### [Example 2]

A carbon catalyst was obtained in the same manner as in Example 1 described above except that with regard to the raw material for carbonization, 1.0 g of 1,10-phenanthroline was used instead of 2-hydroxyquinoxaline, and the addition amount of tin(II) chloride (SnCl₂) was changed to 21.04 g.

Further, the carbon catalyst thus obtained was subjected to the same halogen introduction treatment as that in Example 1 described above to provide a carbon catalyst of Example 2.

### [Example 3]

A carbon catalyst was obtained in the same manner as in Example 1 described above except that with regard to the raw material for carbonization, 5.0 g of ammonium alginate was used instead of 2-hydroxyquinoxaline and the addition amount of tin(II) chloride (SnCl₂) was changed to 4.91 g.

Further, the carbon catalyst thus obtained was subjected to the same halogen introduction treatment as that in Example 1 described above to provide a carbon catalyst of Example 3.

### [Example 4]

A carbon catalyst was obtained in the same manner as in Example 3 described above except that with regard to the raw material for carbonization, 3.53 g of zinc(II) chloride (ZnCl₂) was used instead of tin(II) chloride (SnCl₂).

Further, the carbon catalyst thus obtained was subjected to the same halogen introduction treatment as that in Example 1 described above to provide a carbon catalyst of Example 4.

### [Example C1]

0.5 g of polyacrylonitrile was dissolved in 200 mL of dimetylformamide, and 25.34 g of copper(II) chloride (CuCl₂) was further added thereto to prepare a homogeneous solution. The solution was dried under a vacuum at 80°C for 1 day to provide a raw material for carbonization.

Then, carbonization was performed. That is, the resultant raw material was loaded into an HB tube, and its temperature was increased to 800°C in a Siliconit furnace at a rate of 50°C/min under a nitrogen atmosphere, followed by the holding of the raw material at 800°C for 30 minutes to perform carbonization.

Subsequently, the carbonized material obtained by the carbonization was subjected to pulverization treatment. That is, silicon nitride balls each having a diameter of 10 mm were set in a planetary ball mill (P-7, manufactured by Fritsch Japan Co., Ltd.), and the carbonized material was pulverized with the planetary ball mill.

Further, the carbonized material was subjected to metal removal treatment. That is, 100 mL of concentrated nitric acid was added to the pulverized carbonized material, and the mixture was heated to 80°C and stirred for 2 hours. After that, the solution containing the carbonized material was filtered with a filtration membrane, and the carbonized material was washed with distilled water until a filtrate became neutral. The collected carbonized material was dried in a vacuum.

After that, the carbonized material was subjected to heat treatment. That is, the carbonized material subjected to the metal removal treatment was loaded into a quartz tube, heated in an image furnace under a nitrogen atmosphere, and held at 800°C for 30 minutes to perform heat treatment. Thus, a carbon catalyst was obtained.

Further, the carbon catalyst thus obtained was subjected to the same halogen introduction treatment as that in Example 1 described above to provide a carbon catalyst of Example C1.

### [Example C2]

3.0 g of phthalocyanine was dispersed in 30 mL of acetone, and 15.68 g of copper(II) chloride (CuCl₂) and 0.145 g of iron(III) chloride hexahydrate (FeCl₃·6H₂O) were further added thereto, followed by mixing with a mortar so that the mixture became homogeneous. Thus, a raw material for carbonization was obtained.

Then, the carbonization of the raw material and the pulverization treatment of a carbonized material obtained by the carbonization were performed in the same manner as in Example 1 described above.

Further, the carbonized material was subjected to metal removal treatment. That is, 100 mL of concentrated nitric acid was added to the pulverized carbonized material, and the mixture was heated to 80°C and stirred for 2 hours. After that, the solution containing the carbonized material was filtered with a filtration membrane, and the carbonized material was washed with distilled water until a filtrate became neutral. The collected carbonized material was dried in a vacuum.

After that, the carbonized material was subjected to heat treatment. That is, the carbonized material subjected to the metal removal treatment was loaded into a quartz tube, heated in an image furnace under a nitrogen atmosphere, and held at 600°C for 30 minutes to perform heat treatment. Thus, a carbon catalyst was obtained.

Further, the carbon catalyst thus obtained was subjected to the same halogen introduction treatment as that in Example 1 described above to provide a carbon catalyst of Example C2.

### [Example C3]

2.0 g of phthalocyanine was dispersed in 20 mL of acetone, and 14.74 g of tin(II) chloride (SnCl₂) was further added thereto, followed by mixing with a mortar so that the mixture became homogeneous. Thus, a raw material for carbonization was obtained.

Then, the carbonization of the raw material, the pulverization treatment of a carbonized material obtained by the carbonization, and the metal removal treatment of the carbonized material after the pulverization treatment were performed in the same manner as in Example 1 described above.

After that, the carbonized material was subjected to heat treatment. That is, the carbonized material subjected to the metal removal treatment was loaded into a quartz tube, heated in an image furnace under a nitrogen atmosphere, and held at 600°C for 30 minutes to perform heat treatment. Thus, a carbon catalyst was obtained.

Further, the carbon catalyst thus obtained was subjected to the same halogen introduction treatment as that in Example 1 described above to provide a carbon catalyst of Example C3.

### [Powder X-ray Diffraction]

The carbon catalyst was subjected to powder X-ray diffraction (XRD) measurement with an X-ray diffractometer (XRD-6100, manufactured by Rigaku Corporation). A Cukα ray was used as an incident X-ray, a voltage and current applied to an X-ray tube were set to 40 kV and 15 mA, respectively, and a measurement angle range (2θ) was set within the range of from 5° to 90°. Crystallite sizes Lc and La were obtained by analyzing a powder X-ray diffraction pattern obtained by the XRD measurement of the carbon catalyst as described below.

That is, when the carbon catalyst has a laminated structure of carbon network planes extending in its c-axis direction among crystallites forming carbon network planes, a diffraction peak f₀₀₂, which is a (002) diffraction line of carbon having a peak top in the vicinity of a diffraction angle (2θ) of 26° (e.g., in the range of from 24.0° or more to 26.5° or less), appears in the X-ray diffraction pattern of the carbon catalyst when a CuKα ray is used. In this embodiment, the diffraction peak f₀₀₂ was defined as a diffraction peak having a diffraction angle (2θ) of 25.0° or more and 26.5° or less, and having a full width at half maximum of 0.05° or more and 20° or less.

Then, the crystallite size Lc was calculated by analyzing the f₀₀₂. That is, the resultant X-ray diffraction line pattern was first subjected to intensity correction regarding a Lorentz factor (L), a polarization factor (P), an absorption factor (A), and the atomic scattering factor of carbon (f_{c}), and was then subjected to background correction. Specifically, the intensity correction was performed by dividing a diffraction intensity at each measurement angle by a correction factor calculated from the following equation: correction factor=L*P*A*f_{c}². A method for the background correction is not particularly limited as long as baselines can be aligned with each other. However, in Examples, the background correction was performed by: determining an approximate straight line (linear function) from interval data from a peak start to a peak end; and subtracting a value of the approximate straight line from each diffraction intensity.

Next, the crystallite size Lc was calculated by substituting the Bragg angle and full width at half maximum of the diffraction peak f₀₀₂ in the resultant corrected X-ray diffraction pattern into the following Scherrer equation: Lc=Kλ/(βcosθ). In the Scherrer equation, K represents a Scherrer constant (0.94), λ represents the wavelength of the CuKα ray (0.15418 nm), β represents the full width at half maximum (radian), and θ represents the Bragg angle (radian).

When the carbon catalyst has a stacked structure of carbon hexagonal network planes extending in its a-axis direction among crystallites forming carbon network planes, a diffraction peak f₁₀, which is the (10) diffraction line of carbon having a peak top in the vicinity of a diffraction angle (2θ) of 43° (e.g., in the range of from 35° or more to 60° or less), appears in the X-ray diffraction pattern of the carbon catalyst using a CuKα ray.

Herein, when the carbon catalyst contains iron, a diffraction peak derived from iron may also appear in the vicinity of a diffraction angle (2θ) of 43°. That is, in this case, a diffraction peak f_{Fe}, which is a diffraction line derived from iron, is mixed with the (10) diffraction line of carbon described above, in a diffraction line derived from the carbon structure of the carbon catalyst. In view of the foregoing, with regard to the carbon catalyst containing iron, the diffraction peak in the vicinity of a diffraction angle (2θ) of 43° was separated into two diffraction peaks, that is, the peaks f₁₀ and f_{Fe}, by the peak separation of the X-ray diffraction pattern.

The peak separation was performed by approximating overlapping diffraction peaks through superimposition onto Voigt basic waveforms. The X-ray diffraction pattern having been subjected to the background correction was subjected to fitting by being optimized through use of the peak intensities, peak full widths at half maximum, and peak positions of Voigt functions serving as the respective components as parameters. A method for the background correction is not particularly limited as long as baselines can be aligned with each other. However, in Examples, the background correction was performed by: determining an approximate straight line (linear function) from interval data from a peak start to a peak end; and subtracting a value of the approximate straight line from each diffraction intensity.

More specifically, the peak separation was performed by the following procedure. In the X-ray diffraction pattern obtained by using a CuKα ray having been subjected to the background correction described above, a diffraction peak having a peak top in the vicinity of a diffraction angle 2θ of 43° was approximated through superimposition onto a Voigt basic waveform, the peak intensity, peak full width at half maximum, and peak position thereof were optimized, and two overlapping diffraction peaks in the diffraction peak were each subjected to curve fitting.

The curve fitting was performed so that a residual sum of squares became smallest. Herein, the term "residual square" refers to the square of a residual at each measured diffraction angle, and the term "residual sum of squares" refers to the sum of these residual squares. The term "residual" refers to a difference between the intensity of the diffraction peak having a peak top in the vicinity of a diffraction angle 2θ of 43° in the X-ray diffraction pattern by a CuKα ray, and the sum of the intensities of the two diffraction peaks f₁₀ and f_{Fe} obtained by the separation.

With regard to the carbon catalyst containing iron, the two diffraction peaks f₁₀ and f_{Fe} were obtained by such peak separation. Specifically, the diffraction peak f₁₀ was defined as a diffraction peak having a diffraction angle (2θ) of 43.5°±1.0° and having a full width at half maximum of 7.5°±6.5°. The diffraction peak f_{Fe} was defined as a diffraction peak having a diffraction angle (2θ) of 44.0°±1.0° and having a full width at half maximum of 0.5°±0.3°.

With regard to the carbon catalyst which is free of iron, the diffraction peak f₁₀ was defined as a diffraction peak having a diffraction angle (2θ) of 43.5°±1.0° and having a full width at half maximum of 7.5°±6.5° in the X-ray diffraction pattern of the carbon catalyst using a CuKα ray.

Then, the crystallite size La was calculated by analyzing the resultant diffraction peak f₁₀. That is, the crystallite size La was calculated by substituting the Bragg angle and full width at half maximum of the diffraction peak f₁₀ into the following Scherrer equation: La=Kλ/(βcosθ). In the Scherrer equation, K represents a Scherrer constant (0.94), λ represents the wavelength of the CuKα ray (0.15418 nm), β represents the full width at half maximum (radian), and θ represents the Bragg angle (radian).

### [Temperature Programmed Desorption Analysis]

The carbon catalyst of each example was subjected to temperature programmed desorption analysis (high-temperature TPD) with a temperature programmed desorption analyzer (high-temperature TPD analyzer) capable of increasing a temperature up to 1,600°C. The high-temperature TPD analyzer is an apparatus capable of heating a graphite crucible serving as a body to be heated to a high temperature of 1,600°C or more through highfrequency electromagnetic induction heating. The details of the high-temperature TPD analyzer are described in the journal Carbon (Takafumi Ishi, Susumu Kashihara, Yasuto Hoshikawa, Junichi Ozaki, Naokatsu Kannari, Kazuyuki Takai, Toshiaki Enoki, Takashi Kyotani, Carbon, Volume 80, December 2014, pages 135-145).

The carbon catalyst was placed in the high-temperature TPD analyzer. The carbon catalyst was heated under a high vacuum of 5×10⁻⁵ Pa or less, and a desorbed gas was measured with a quadrupole mass spectrometer (QMS).

Specifically, first, a graphite crucible was filled with 1 mg of the carbon catalyst and set in a quartz reaction tube attached to the high-temperature TPD analyzer. Subsequently, the inside of the analyzer was evacuated with a turbo-molecular pump, and the evacuation was performed until its pressure became 5×10⁻⁵ Pa. After that, its temperature was increased from room temperature to 1,600°C at a temperature increase rate of 10°C/min. During the temperature increase, a desorbed gas was detected, and a correlation between a temperature (horizontal axis) and a detection intensity (vertical axis) was recorded. Then, the amount of the desorbed gas was determined. That is, the integrated value of the detection intensities (detection intensity area) of the gas from room temperature, at which heat treatment was started, to the temperature to be determined (1,600°C) was calculated.

On the other hand, a calibration curve showing a correlation between the desorption amount of the gas and the detection intensity area was prepared using predetermined amounts of a standard gas. In the analysis of the desorbed gas from the sample with the QMS, the fragment intensity ratios of various gaseous species (H₂, H₂O, CO, CO₂, N₂, HCN, O₂, CH₄, C₂H₆, C₃H₆, and C₃H₈) were investigated and used in the qualitative analysis of the desorbed gas, to clearly distinguish the gaseous species with the same mass (species with a mass number of 28 may be CO, N₂, C₂H₄, and the like) in the desorbed gas. Then, the desorption amount (release amount) of the gas from the carbon catalyst was determined on the basis of the detection intensity area obtained by the measurement, and the calibration curve and the fragment intensity ratios. To validate the adequacy of the formed calibration curve, Ketjen black EC600JD (Lion Specialty Chemicals Co., Ltd.) was subjected to measurement, and it was recognized that the amount of edge hydrogen fell within the range of from 1,000 µmol/g to 1,500 µmol/g.

Herein, the actual size of a carbon network plane forming carbon may be evaluated from an average carbon network plane size L determined from the amount of the edge sites of carbon. In the embodiment of the present invention, from the results of desorbed gas quantitative determination of high-temperature TPD of the carbon catalyst, the total amount of carbon edge sites of the carbon catalyst was calculated, and the average carbon network plane size L determined from the amount was calculated with a coronene model shown in FIG. 1. In the equation shown in FIG. 1, a₀ represents the lattice constant of a graphite crystal in the a-axis direction, which is 0.2461 nm.

It is known that a phenolic hydroxy group of an oxygencontaining compound is decomposed in the form of carbon monoxide by temperature increase, and leaves a hydrogen atom derived from the hydroxy group at a carbon edge site. Accordingly, the hydrogen amount determined by high-temperature TPD may include a contribution of hydrogen derived from the phenolic hydroxy group.

Both of an ether (-O) and a phenolic hydroxy group (-OH) are functional groups to be desorbed as CO in the vicinity of 700°C. After the phenolic hydroxy group has been desorbed as CO, H remains at an edge site. Accordingly, the phenolic hydroxy group desorbed CO and then desorbed H₂ at a temperature of 1, 000°C or more. The phenolic hydroxy group differs from the ether in that two gaseous species (CO and H₂) are desorbed from one functional group. The ether and the phenolic hydroxy group cannot be distinguished on the basis of the desorption of CO observed by TPD analysis.

Accordingly, to precisely calculate the total amount of edge sites, the ether and the phenolic hydroxy group need to be considered. In view of the foregoing, in the high-temperature TPD, it is assumed that the ether (-O-) is desorbed as CO. Meanwhile, although the phenolic hydroxy group (-OH) is actually desorbed as CO and H₂, the number of the edge sites is overestimated when both the gases are considered at the same time. Accordingly, it is assumed that the phenolic hydroxy group (-OH) is desorbed as H₂. Possible values of the total amount (N_{edge}) of the edge sites of the carbon catalyst were calculated from the following two equations.

That is, the lower limit value N_{edge} (Min) of the total amount of the edge sites was calculated from the following equation: N_{edge} (Min) [µmol/g]=CO₂ [µmol/g] +H₂ [µmol/g] ×2+N₂ [µmol/g] ×2+HCN [µmol/g] ×2. The upper limit value N_{edge} (Max) of the total amount of the edge sites was calculated from the following equation: N_{edge}(Max) [µmol/g]=CO [µmol/g]+CO₂ [µmol/g]+H₂ [µmol/g] ×2+N₂ [µmol/g] ×2+HCN [µmol/g] ×2. CO [µmol/g], CO₂ [µmol/g], H₂ [µmol/g], N₂ [µmol/g], and HCN [µmol/g] in the equations are the desorption gas amounts of carbon monoxide, carbon dioxide, hydrogen, nitrogen, and hydrogen cyanide determined from the high-temperature TPD, respectively.

On the other hand, the average carbon network plane size L is determined from the following equation through use of an atomic weight of a carbon atom of 12 g/mol and a lattice constant of a graphite crystal in the a-axis direction of 0.2461 nm: L [nm]=2×1/12×0.2461/N_{edge} [mol/g]. Herein, the maximum value "L(Max)" and minimum value "L(Min)" of L are calculated from the following two equations, respectively: "L (Max)" [nm]=2×1/12×0.2461/N_{edge} (Min) [mol/g]; and "L(Min) " [nm]=2×1/12×0.2461/N_{edge}(Max) [mol/g] .

As described above, since the ether and the phenolic hydroxy group cannot be distinguished, two values, which are the maximum value and the minimum value, are calculated for the average carbon network plane size L. Although "L (Max)" is a value in the case where the phenolic hydroxy group alone is present, and "L (Min)" is a value in the case where the ether alone is present, it is unlikely that an actual carbon material has only one of the phenolic hydroxy group or the ether. Accordingly, in the embodiment of the present invention, the average carbon network plane size L of the carbon catalyst was defined as a median "L(av.)" of "L(Max)" and "L(Min)". That is, "L(av.)" was calculated by dividing the sum of "L(Min)", which was obtained as the minimum value of possible values of the average carbon network plane size L, and "L(Max)", which was obtained as the maximum value of the possible values, by 2. "L(av.)" was obtained as the average carbon network plane size L of the carbon catalyst.

### [X-ray Photoelectron Spectroscopy (XPS)]

Photoelectron spectra from the core levels of carbon atoms, nitrogen atoms, oxygen atoms, chlorine atoms, and raw material-derived metal atoms (metal atoms in a carbonization raw material used for the production of a carbon catalyst) on the surface of the carbon catalyst of each example were measured by using an X-ray photoelectron spectrometer (AXIS NOVA, manufactured by Kratos Analytical Limited). An AlKα ray (10 mA, 15 kV, pass energy: 40 eV) was used for an X-ray source. In the resultant photoelectron spectrum, the correction of binding energy was performed so that the peak top of a C1s peak derived from the 1s orbital of the carbon atom was positioned at 284.5 eV.

In XPS wide scan analysis, the atom concentrations (at%) of the carbon atoms, nitrogen atoms, oxygen atoms, chlorine atoms, and raw material-derived metal atoms on the surface of the carbon catalyst were determined from peak areas and detection sensitivity factors in the photoelectron spectrum. Then, the N/C ratio was calculated by dividing its nitrogen atom concentration (at%) by its carbon atom concentration (at%). The Cl/C ratio thereof was calculated as a halogen/C ratio by dividing its chlorine atom concentration (at%) by the carbon atom concentration (at%). The calculation of the atom concentrations (at%) was performed on the assumption that the carbon catalyst contained carbon atoms, nitrogen atoms, oxygen atoms, chlorine atoms, and raw material-derived metal atoms. A background at the time of quantitative calculation was determined by a Shirley method.

Further, the peak separation of an N1s spectrum was performed in the resultant XPS spectrum. That is, an N1s spectrum having a peak top in the range of from 389 eV or more to 410 eV or less was separated into: (1) a peak having a peak top in the range of 398.5±0.3 eV and having a full width at half maximum of 1.4 eV (pyridinic nitrogen atom peak); (2) a peak having a peak top in the range of 400.5±0.3 eV and having a full width at half maximum of 1.4 eV (pyrrolic/pyridonic nitrogen atom peak); (3) a peak having a peak top in the range of 401.5±0.3 eV and having a full width at half maximum of 1.4 eV (quaternary nitrogen atom peak); and (4) a peak having a peak top in the range of 402.5±0.3 eV and having a full width at half maximum of 2.0 eV (oxidized nitrogen atom peak).

Specifically, the separation of the N1s spectrum was performed by approximating overlapping peaks through the superposition of Gaussian-Lorentzian basic waveforms. The spectrum subjected to energy value correction and intensity correction, which will be described later, was optimized by using the peak intensity and peak position of a Gaussian-Lorentzian function, which served as the respective components, as parameters, and the peak separation was performed by subjecting each of the above-mentioned four overlapping peaks in the N1s spectrum to curve fitting. The curve fitting was performed so as to minimize the residual sum of squares. Herein, the term "residual square" refers to the square of a residual at each measured energy value, and the term "residual sum of squares" refers to the sum of these residual squares. The term "residual" refers to a difference between the intensity of the N1s spectrum in the corrected spectrum and the sum of the intensities of the four separated peaks.

With regard to the correction, first, the XPS spectrum obtained by XPS measurement was subjected to energy value correction. The measurement results of carbon atoms derived from C1s were used for the energy value correction. When the normal value (284.5 eV) of the peak top of the C1s peak and the measured peak top of the C1s peak deviated from each other, a numerical value obtained by subtracting the measured C1s peak value from the normal value was added to the binding energy value of the N1s spectrum. Next, intensity correction was performed. The intensity correction was performed by subtracting the background intensity determined by the Shirley method from the intensity of a spectrum obtained by the energy value correction. The peak separation was performed by using a spectrum obtained by such correction.

Then, the percentage (%) of the area of each peak to the total area of the four peaks obtained by the peak separation, that is, a pyridinic nitrogen peak, a pyrrolic/pyridonic nitrogen peak, a quaternary nitrogen peak, and an oxidized nitrogen peak, was calculated.

### [Specific Surface Area]

The specific surface area of the carbon catalyst of each example by a nitrogen adsorption method was measured with a specific surface area-pore distribution measurement apparatus (BELSORP MINI X, manufactured by MicrotracBEL Corp.). That is, first, 0.03 g of the carbon catalyst was held at 200°C and 6.7×10⁻² Pa for 2 hours so that water adsorbed to the carbon catalyst was removed. Next, a nitrogen adsorption isotherm at 77 K was obtained by a BET method. The nitrogen adsorption isotherm at 77 K was obtained by measuring a change in amount of nitrogen adsorbed to the carbon catalyst associated with a change in pressure of a nitrogen gas at a temperature of 77 K. Then, the BET specific surface area (m²/g) of the carbon catalyst acquired using a nitrogen adsorption method was obtained from the nitrogen adsorption isotherm at a temperature of 77 K.

### [Evaluations of Catalytic Activity and Durability]

The catalytic activity of each of the carbon catalysts was evaluated with a rotating ring-disk electrode apparatus (RRDE-3A Rotating Ring-disk Electrode Apparatus ver. 1.2, manufactured by BAS Inc.) and a dual electrochemical analyzer (CHI700C, manufactured by ALS Co., Ltd.).

That is, a rotating ring-disk electrode apparatus of a three-electrode system having a working electrode including each of the carbon catalysts was first produced. Specifically, 5 mg of the carbon catalyst, 50 µL of 5% NAFION (trademark) (manufactured by Sigma-Aldrich, NAFION perfluorinated ionexchange resin, 5% solution (product number: 510211)), 400 µL of water, and 100 µL of isopropyl alcohol were mixed to prepare a slurry. Next, the slurry was subjected to ultrasonic treatment for 10 minutes, and then subjected to homogenizer treatment for 2 minutes. Then, the resultant slurry was applied to a working electrode (ring-disk electrode for RRDE-3A, carbon ring-gold disk electrode, disk diameter: 4 mm, manufactured by BAS Inc.) so that the content of the carbon catalyst per unit area of the electrode became 0.2 mg/cm², followed by drying to produce a working electrode including the carbon catalyst supported thereon.

A carbon electrode (glassy carbon rod, φ2 mm×100 mm, manufactured by BAS Inc.) was used as a counter electrode, and a reversible hydrogen electrode (RHE) (storage type reversible hydrogen electrode, manufactured by EC Frontier Co., Ltd.) was used as a reference electrode. Thus, a rotating ring-disk electrode apparatus with the working electrode including the carbon catalyst, the carbon electrode serving as the counter electrode, and the reversible hydrogen electrode (RHE) serving as the reference electrode, was obtained. A 0.05 M aqueous solution of sulfuric acid was used as an electrolytic solution.

Then, the catalytic activity of each of the carbon catalysts was measured with the above-mentioned rotating ring-disk electrode apparatus. That is, linear sweep voltammetry (N₂-LSV) under a nitrogen atmosphere and linear sweep voltammetry (O₂-LSV) under an oxygen atmosphere were performed with the rotating ring-disk electrode apparatus of a three-electrode system having the working electrode including each of the carbon catalysts.

In the N₂-LSV, nitrogen bubbling was first performed for 10 minutes to remove oxygen in the electrolytic solution. After that, the electrode was rotated at a rotation speed of 1,600 rpm, and a current density at the time of potential sweep at a sweep speed of 20 mV/sec was recorded as a function of potential (N₂-LSV function).

After the above-mentioned N₂-LSV, in the O₂-LSV, oxygen bubbling was first performed for 10 minutes, and the electrolytic solution was filled with saturated oxygen. After that, the electrode was rotated at a rotation speed of 1,600 rpm, and a current density at the time of potential sweep at a sweep speed of 20 mV/sec was recorded as a function of potential (O₂-LSV function).

Then, an oxygen reduction voltammogram was obtained by subtracting the N₂-LSV function from the O₂-LSV function, the functions being obtained as described above. In the resultant oxygen reduction voltammogram, positive and negative signs were placed before numerical values so that a reduction current had a negative value and an oxidation current had a positive value.

From the oxygen reduction voltammogram thus obtained, a voltage (oxygen reduction-starting potential E_{O2}) (V vs. NHE) at the time when a reduction current of -10 µA/cm² flowed was recorded as an indicator of the catalytic activity of each of the carbon catalysts itself.

The durability of the carbon catalyst was similarly evaluated by using a rotating ring-disk electrode apparatus and a dual electrochemical analyzer. That is, first, an oxygen reduction voltammogram was obtained in the same manner as in the above-mentioned evaluation of catalytic activity. Then, a current density at 0.3 V (vs. NHE) (pre-deterioration current density) (mA/cm²) was recorded from the resultant oxygen reduction voltammogram as an indicator of the amount of the catalytic active sites of the carbon catalyst before a deterioration acceleration test.

After that, the deterioration acceleration test was continuously performed by using the working electrode used for the measurement of the pre-deterioration current density described above. That is, cyclic voltammetry in the range of from 1.0 V to 1.5 V under a nitrogen atmosphere using a rotating ring-disk electrode apparatus of a three-electrode system was performed for 100 cycles at 0.5 V/s (start-stop test).

Further, after the above-mentioned start-stop test, nitrogen bubbling was performed for 10 minutes to remove oxygen in the electrolytic solution, and an oxygen reduction voltammogram was obtained in the same manner as in the measurement of the pre-deterioration current density described above. Then, a current density at 0.3 V (vs. NHE) (post-deterioration current density) (mA/cm²) was recorded from the resultant oxygen reduction voltammogram as an indicator of the amount of the catalytic active sites of the carbon catalyst after the deterioration acceleration test. The durability (%) was calculated by: dividing the post-deterioration current density thus obtained by the pre-deterioration current density; and multiplying the resultant value by 100.

### [Results]

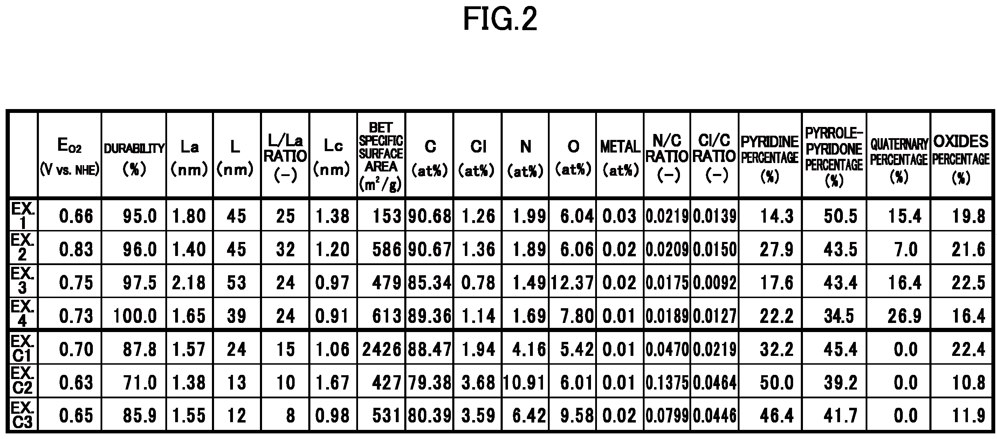

FIG. 2 shows the results of the evaluations of the characteristics of the carbon catalyst of each example. As shown in FIG. 2, the catalytic activity (E_{O2} (V vs. NHE)) of each of the carbon catalysts of Example 1 to Example 4 was higher than that of each of the carbon catalysts of Example C2 and Example C3. The catalytic activity of each of the carbon catalysts of Example 2 to Example 4, among those examples, was higher than that of each of the carbon catalysts of Example C1 to Example C3. In particular, the carbon catalyst of Example 2 had significantly high catalytic activity.

The durability (%) of each of the carbon catalysts of Example 1 to Example 4 was significantly higher than that of each of the carbon catalysts of Example C1 to Example C3. That is, the carbon catalysts of Example 1 to Example 4 each had both high catalytic activity and high durability.

The carbon catalysts of Example 1 to Example 4 each had an L/La ratio significantly larger than those of the carbon catalysts of Example C1 to Example C3. Herein, the crystallite sizes La of the carbon catalysts of Example 1 to Example 4 were not much different from those of the carbon catalysts of Example C1 to Example C3. In contrast, the average carbon network plane size L of each of the carbon catalysts of Example 1 to Example 4 was significantly larger than those of the carbon catalysts of Example C1 to Example C3. The crystallite sizes Lc of the carbon catalysts of Example 1 to Example 4 were not much different from those of the carbon catalysts of Example C1 to Example C3. The BET specific surface area of the carbon catalyst of Example C1 was significantly large, and that of the carbon catalyst of Example 1 was smallest.

The carbon atom concentrations (C (at%)), oxygen atom concentrations (O (at%)), and metal atom concentrations (Metal (at%)) of the carbon catalysts of Example 1 to Example 4 measured by the XPS were not much different from those of the carbon catalysts of Example C1 to Example C3.

In contrast, the chlorine atom concentration (Cl (at%)) of each of the carbon catalysts of Example 1 to Example 4 was smaller than those of the carbon catalysts of Example C1 to Example C3. In this regard, it is conceivable that each of the carbon structures in the carbon catalysts of Example 1 to Example 4 has an average carbon network plane size L larger than those of the carbon catalysts of Example C1 to Example C3, and the number of the edge sites of its carbon network plane is small, and hence the amount of chlorine atoms introduced into the edge sites of each of the carbon catalysts of Example 1 to Example 4 becomes smaller than those of the carbon catalysts of Example C1 to Example C3.

The nitrogen atom concentration (N (at%)) of each of the carbon catalysts of Example 1 to Example 4 was smaller than those of the carbon catalysts of Example C1 to Example C3. This difference was conceived to be caused by differences in: carbonization temperature during the production of a carbon catalyst; and amount of nitrogen atoms in a carbonization raw material used for the production.

The N/C ratio and Cl/C ratio of each of the carbon catalysts of Example 1 to Example 4 were smaller than those of the carbon catalysts of Example C1 to Example C3 because of the fact that the nitrogen atom concentration (N (at%)) and chlorine atom concentration (Cl (at%)) of each of the carbon catalysts of Example 1 to Example 4 were small, as described above.

With regard to the kinds of nitrogen atoms in a carbon catalyst, while the carbon catalysts of Example 1 to Example 4 each contained quaternary nitrogen atoms, the carbon catalysts of Example C1 to Example C3 were each free of any quaternary nitrogen atom. Specifically, the quaternary nitrogen percentage ("QUATERNARY PERCENTAGE (%)" in the figure) of each of the carbon catalysts of Example 1 to Example 4, the percentage being the percentage of its quaternary nitrogen atom concentration (at%) to its nitrogen atom concentration (total concentration of nitrogen atoms) (N (at%)), was 7.0% or more.

Meanwhile, the pyridinic nitrogen percentage ("PYRIDINE PERCENTAGE (%)" in the figure) of each of the carbon catalysts of Example 1 to Example 4, the percentage being the percentage of its pyridinic nitrogen atom concentration (at%) to its nitrogen atom concentration (N (at%)), was smaller than those of the carbon catalysts of Example C1 to Example C3.

It was conceivable that those differences in percentage of quaternary nitrogen atoms and percentage of pyridinic nitrogen atoms were caused by the fact that the carbon structures in the carbon catalysts of Example 1 to Example 4 each had a relatively large L/La ratio.

## Claims

1. A carbon catalyst,
wherein the carbon catalyst has an L/La ratio of 18 or more, the L/La ratio being a ratio of an average carbon network plane size L obtained by temperature programmed desorption analysis capable of increasing a temperature up to 1,600°C to a crystallite size La obtained from a diffraction peak in the vicinity of a diffraction angle (20) of 43° in an X-ray diffraction pattern obtained by powder X-ray diffraction using a CuKα ray, and
wherein the carbon catalyst has a ratio of a halogen atom concentration (at%) to a carbon atom concentration (at%), which is obtained by X-ray photoelectron spectroscopy, of 0.0005 or more.

2. The carbon catalyst according to claim 1, wherein the average carbon network plane size L is 5 nm or more.

3. The carbon catalyst according to claim 1, wherein the crystallite size La is 10.00 nm or less.

4. The carbon catalyst according to claim 1, wherein the carbon catalyst comprises a nitrogen atom.

5. The carbon catalyst according to claim 1, wherein the carbon catalyst has a ratio of a nitrogen atom concentration (at%) to a carbon atom concentration (at%), which is obtained by the X-ray photoelectron spectroscopy, of 0.0005 or more.

6. The carbon catalyst according to claim 1, wherein the carbon catalyst has a percentage of an area of a quaternary nitrogen atom peak to a total area of the following four nitrogen atom peaks of 0.1% or more, the percentage being obtained by subjecting an N1s spectrum in a spectrum obtained by the X-ray photoelectron spectroscopy to peak separation into the four nitrogen atom peaks:
(1) a pyridinic nitrogen atom peak having a peak top in a range of 398.5±0.3 eV and having a full width at half maximum of 1.4 eV;
(2) a pyrrolic/pyridonic nitrogen atom peak having a peak top in a range of 400.5±0.3 eV and having a full width at half maximum of 1.4 eV;
(3) the quaternary nitrogen atom peak having a peak top in a range of 401.5±0.3 eV and having a full width at half maximum of 1.4 eV; and
(4) an oxidized nitrogen atom peak having a peak top in a range of 402.5±0.3 eV and having a full width at half maximum of 2.0 eV.

7. The carbon catalyst according to claim 1, wherein the carbon catalyst has a BET specific surface area obtained by a nitrogen adsorption method of 50 m²/g or more.

8. An electrode, comprising the carbon catalyst of any one of claims 1 to 7.

9. A battery, comprising the electrode of claim 8.
